(19) Europäisches Patentamt
European Patent Office
Office européen des brevets

(11) **EP 4 507 421 A1**

(12) **EUROPEAN PATENT APPLICATION**
published in accordance with Art. 153(4) EPC

(43) Date of publication:
**12.02.2025 Bulletin 2025/07**

(21) Application number: **22936216.5**

(22) Date of filing: **08.04.2022**

(51) International Patent Classification (IPC):
**H04W 72/04** (2023.01)

(52) Cooperative Patent Classification (CPC):
**H04W 72/04**

(86) International application number:
**PCT/CN2022/085977**

(87) International publication number:
**WO 2023/193279 (12.10.2023 Gazette 2023/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **QIAO, Xuemei
Beijing 100085 (CN)**
• **BAI, Yingshuang
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **FREQUENCY-DOMAIN RESOURCE CONFIGURATION METHOD AND APPARATUS**

(57) Disclosed in the embodiments of the present application are a frequency-domain resource configuration method and apparatus. The method comprises: receiving first indication information, which is sent by a network device (201); and according to the first indication information, determining frequency-domain resources, which are occupied by a control resource set (CORESET), wherein a first frequency-domain resource among the frequency-domain resources, which are occupied by the CORESET, is beyond a bandwidth supported by a terminal device (202). A frequency-domain resource occupied by a CORESET of a terminal device is allowed to exceed a bandwidth supported by the terminal device, such that the terminal device can support a higher aggregation level to the greatest extent possible, thereby effectively improving the transmission performance of a downlink channel, enhancing the coverage of the downlink channel, improving the communication efficiency of a system, effectively reducing a waste of resources, and increasing the utilization rate of resources.

receiving first indication information from a network device — 201

↓

determining, based on the first indication information, frequency domain resources occupied by a control resource set (CORESET), in which a first frequency domain resource in the frequency domain resources occupied by the CORESET is outside a bandwidth supported by the terminal — 202

FIG. 2

**Description**

**TECHNICAL FIELD**

The present disclosure relates to the technical field of communication, and more particularly relates to a method and an apparatus for configuring frequency domain resources, and a communication device.

**BACKGROUND**

In the related art, a control resource set (CORESET) of a terminal occupies 1 to 3 continuous symbols in a time domain, and frequency domain resources are configured in a frequency domain in a way similar to a physical downlink shared channel (PDSCH) resource allocation type 0 (i.e., PDSCH resource allocation type 0).

In Release 18, it is proposed that a bandwidth is further reduced for a reduced capability (RedCap) terminal to support a service type which is not high in data rate and is sensitive to manufacturing cost, such as a factory sensor. At the same time, configuration for sub-carrier spacings such as 15KHz and 30KHz may still be supported, resulting in a reduction in available frequency domain resources within a bandwidth range. If the method for allocating CORESET frequency domain resources in the related art is still used, it may result in that a part of frequency domain resources within the bandwidth range may never be utilized.

**SUMMARY**

According to a first aspect of embodiments of the present disclosure, a method for configuring frequency domain resources is provided, which is performed by a terminal. The method includes: receiving first indication information from a network device; and determining, based on the first indication information, frequency domain resources occupied by a control resource set (CORESET), in which a first frequency domain resource in the frequency domain resources occupied by the CORESET is outside a bandwidth supported by the terminal.

Optionally, the method further includes: determining, based on second indication information, the first frequency domain resource outside the bandwidth supported by the terminal from the frequency domain resources occupied by the CORESET; in which the second indication information includes at least one of: a number of physical downlink control channel (PDCCH) candidates, a number of resource element groups (REGs) in a REG bundle, or a cyclic shift parameter of the REG.

Optionally, determining, based on second indication information, the first frequency domain resource outside the bandwidth supported by the terminal from the frequency domain resources occupied by the CORESET includes: determining, based on each control channel element (CCE) index, a target CCE from at least one CCE to which the REG is mapped, in which a REG frequency domain corresponding to the target CCE occupies at least one frequency domain resource unit; in response to determining that the at least one frequency domain resource unit where the REG frequency domain corresponding to the target CCE is located includes a frequency domain resource unit with a lowest frequency in the frequency domain resources occupied by the CORESET, determining that at least the frequency domain resource unit with the lowest frequency is the first frequency domain resource outside the bandwidth supported by the terminal; and in response to determining that the at least one frequency domain resource unit where the REG frequency domain corresponding to the target CCE is located includes a frequency domain resource unit with a highest frequency in the frequency domain resources occupied by the CORESET, determining that at least the frequency domain resource unit with the highest frequency is the first frequency domain resource outside the bandwidth supported by the terminal.

Optionally, determining, based on second indication information, the first frequency domain resource outside the bandwidth supported by the terminal from the frequency domain resources occupied by the CORESET includes: determining, based on the number of PDCCH candidates, at least one CCE that is not mapped to the PDCCH candidates; and determining that a set number of frequency domain resource units with a highest frequency position and/or a set number of frequency domain resource units with a lowest frequency position in the at least one CCE that is not mapped to the PDCCH candidates are the first frequency domain resource outside the bandwidth supported by the terminal.

Optionally, a frequency domain resource unit with a lowest frequency in the frequency domain resources occupied by the CORESET is aligned with a frequency domain resource unit with a lowest frequency in the bandwidth supported by the terminal; or a frequency domain resource unit with a highest frequency in the frequency domain resources occupied by the CORESET is aligned with a frequency domain resource unit with a highest frequency in the bandwidth supported by the terminal.

Optionally, the CORESET is CORESET#0, the first indication information is remaining minimum system information (RMSI), and the first indication information is configured to determine a frequency domain resource length for the CORESET#0 and a corresponding number of symbols for the CORESET#0 from at least one combination of a frequency domain resource length and a corresponding number of symbols agreed by a protocol.

According to a second aspect of embodiments of the present disclosure, a method for configuring frequency domain resources is provided, which is performed by a network device. The method includes: sending first indication information to a terminal, in which the first indication information is configured to determine frequency domain resources occupied by a CORESET; a first frequency domain resource in the frequency domain resources occupied by the CORESET is outside a bandwidth supported by the terminal.

Optionally, a frequency domain resource unit with a lowest frequency in the frequency domain resources occupied by the CORESET is aligned with a frequency domain resource unit with a lowest frequency in the bandwidth supported by the terminal; or a frequency domain resource unit with a highest frequency in the frequency domain resources occupied by the CORESET is aligned with a frequency domain resource unit with a highest frequency in the bandwidth supported by the terminal.

Optionally, the CORESET is CORESET#0, the first indication information is RMSI, and the first indication information is configured to determine a frequency domain resource length for the CORESET#0 and a corresponding number of symbols for the CORESET#0 from at least one combination of a frequency domain resource length and a corresponding number of symbols agreed by a protocol.

According to a third aspect of embodiments of the present disclosure, an apparatus for configuring frequency domain resources is provided, which is applied to a terminal. The apparatus includes: a transceiver unit, configured to receive first indication information from a network device; and a processing unit, configured to determine, based on the first indication information, frequency domain resources occupied by a CORESET, in which a first frequency domain resource in the frequency domain resources occupied by the CORESET is outside a bandwidth supported by the terminal.

Optionally, the processing unit is further configured to: determine, based on second indication information, the first frequency domain resource outside the bandwidth supported by the terminal from the frequency domain resources occupied by the CORESET; in which the second indication information comprises at least one of: a number of PDCCH candidates, a number of REGs in a REG bundle, or a cyclic shift parameter of the REG.

Optionally, the processing unit is specifically configured to: determine, based on each CCE index, a target CCE from at least one CCE to which the REG is mapped, in which a REG frequency domain corresponding to the target CCE occupies at least one frequency domain resource unit; in response to determining that the at least one frequency domain resource unit where the REG frequency domain corresponding to the target CCE is located includes a frequency domain resource unit with a lowest frequency in the frequency domain resources occupied by the CORESET, determine that at least the frequency domain resource unit with the lowest frequency is the first frequency domain resource outside the bandwidth supported by the terminal; and in response to determining that the at least one frequency domain resource unit where the REG frequency domain corresponding to the target CCE is located includes a frequency domain resource unit with a highest frequency in the frequency domain resources occupied by the CORESET, determine that at least the frequency domain resource unit with the highest frequency is the first frequency domain resource outside the bandwidth supported by the terminal.

Optionally, the processing unit is specifically configured to: determining, based on the number of PDCCH candidates, at least one CCE that is not mapped to the PDCCH candidates; and determining that a set number of frequency domain resource units with a highest frequency position and/or a set number of frequency domain resource units with a lowest frequency position in the at least one CCE that is not mapped to the PDCCH candidates are the first frequency domain resource outside the bandwidth supported by the terminal.

Optionally, a frequency domain resource unit with a lowest frequency in the frequency domain resources occupied by the CORESET is aligned with a frequency domain resource unit with a lowest frequency in the bandwidth supported by the terminal; or a frequency domain resource unit with a highest frequency in the frequency domain resources occupied by the CORESET is aligned with a frequency domain resource unit with a highest frequency in the bandwidth supported by the terminal.

Optionally, the CORESET is CORESET#0, the first indication information is RMSI, and the first indication information is configured to determine a frequency domain resource length for the CORESET#0 and a corresponding number of symbols for the CORESET#0 from at least one combination of a frequency domain resource length and a corresponding number of symbols agreed by a protocol.

According to a fourth aspect of embodiments of the present disclosure, an apparatus for configuring frequency domain resources is provided, which is applied to a network device. The apparatus includes: a transceiver unit, configured to send first indication information to a terminal; in which the first indication information is configured to determine frequency domain resources occupied by a CORESET, and a first frequency domain resource in the frequency domain resources occupied by the CORESET is outside a bandwidth supported by the terminal.

Optionally, a frequency domain resource unit with a lowest frequency in the frequency domain resources occupied by the CORESET is aligned with a frequency domain resource unit with a lowest frequency in the bandwidth supported by the terminal; or a frequency domain resource unit with a highest frequency in the frequency domain resources occupied by the CORESET is aligned with a frequency domain resource unit with a highest frequency in the bandwidth supported by the terminal.

Optionally, the CORESET is CORESET#0, the first indication information is RMSI, and the first indication information is configured to determine a frequency domain resource length for the CORESET#0 and a corresponding number of symbols for the CORESET#0 from at least one combination of a frequency domain resource length and a corresponding number of symbols agreed by a protocol.

According to a fifth aspect of embodiments of the present disclosure, a communication device is provided, which includes a processor and a memory storing a computer program. When the computer program is executed by the processor, the device is caused to perform the method for configuring frequency domain resources described in the first aspect of the embodiments.

According to a sixth aspect of embodiments of the present disclosure, a communication device is provided, which includes a processor and a memory storing a computer program. When the computer program is executed by the processor, the device is caused to perform the method for configuring frequency domain resources described in the first aspect of the embodiments.

According to a seventh aspect of embodiments of the present disclosure, a communication device is provided, which includes a processor, and an interface circuit. The interface circuit is configured to receive code instructions and transmit the code instructions to the processor. The processor is configured to run the code instructions, so that the device is caused to execute the frequency domain resource configuration method described in the first aspect embodiment above.

According to an eighth aspect of embodiments of the present disclosure, a communication device is provided, which includes a processor, and an interface circuit. The interface circuit is configured to receive code instructions and transmit the code instructions to the processor. The processor is configured to run the code instructions, so that the device is caused to execute the frequency domain resource configuration method described in the second aspect embodiment above.

According to a ninth aspect of embodiments of the present disclosure, a computer-readable storage medium for storing instructions is provided. When the instructions are executed by the processor, the method for configuring frequency domain resources is implemented as described in the first aspect of the embodiments.

According to a tenth aspect of embodiments of the present disclosure, a computer-readable storage medium for storing instructions is provided. When the instructions are executed by the processor, the method for configuring frequency domain resources is implemented as described in the second aspect of the embodiments.

According to an eleventh aspect of embodiments of the present disclosure, a computer program is provided. When the computer program is executed, a computer is caused to execute the method for configuring frequency domain resources as described in the first aspect of the embodiments.

According to a twelfth aspect of embodiments of the present disclosure, a computer program is provided. When the computer program is executed, a computer is caused to execute the method for configuring frequency domain resources as described in the second aspect of the embodiments.

According to the method and apparatus for configuring frequency domain resources in the embodiments of the present disclosure, the first indication information is received from the network device, the frequency domain resources occupied by the CORESET are determined based on the first indication information, in which the first frequency domain resource in the frequency domain resources occupied by the CORESET is outside the bandwidth supported by the terminal. It is allowed that the frequency domain resources occupied by the CORESET for the terminal exceed the bandwidth supported by the terminal, so that the terminal can support a larger aggregation level as much as possible, which effectively improves a transmission performance of a downlink channel, enhances a coverage of the downlink channel, improves a system communication efficiency, effectively reduces a resource waste, and improves a resource utilization.

Additional aspects and advantages of the present disclosure will be partly given in the following descriptions, and partly will become apparent from the descriptions below, or will be learned through the practice of the present disclosure.

## BRIEF DESCRIPTION OF THE DRAWINGS

In order to more clearly illustrate the technical solutions in the embodiments of the present disclosure or the related art, the drawings required for use in the embodiments of the present disclosure or the related art will be described below.

FIG. 1a is an architecture diagram illustrating a communication system in embodiments of the present disclosure.
FIG. 1b is a diagram illustrating configuring frequency domain resources in the related art in embodiments of the present disclosure.
FIG. 2 is a flowchart illustrating a method for configuring frequency domain resources according to embodiments of the present disclosure.
FIG. 3a is a diagram illustrating numbering resource element groups (REGs) according to embodiments of the present disclosure.

FIG. 3b is a diagram illustrating a control channel element (CCE)-to-REG non-interleaved mapping according to embodiments of the present disclosure.

FIG. 3c is a diagram illustrating a CCE-to-REG interleaved mapping according to embodiments of the present disclosure.

FIG. 3d is a diagram illustrating a CCE-to-REG interleaving mapping according to embodiments of the present disclosure.

FIG. 4 is a flowchart illustrating a method for configuring frequency domain resource according to embodiments of the present disclosure.

FIG. 5 is a diagram illustrating a CCE-to-REG interleaved mapping according to embodiments of the present disclosure.

FIG. 6 is a flowchart illustrating a method for configuring frequency domain resource according to embodiments of the present disclosure.

FIG. 7 is a diagram illustrating a CCE-to-REG interleaved mapping according to embodiments of the present disclosure.

FIG. 8 is a flowchart illustrating a method for configuring frequency domain resource according to embodiments of the present disclosure.

FIG. 9 is a flowchart illustrating a method for configuring frequency domain resource according to embodiments of the present disclosure.

FIG. 10 is a structural diagram illustrating an apparatus for configuring frequency domain resource according to embodiments of the present disclosure.

FIG. 11 is a structural diagram illustrating an apparatus for configuring frequency domain resource according to embodiments of the present disclosure.

FIG. 12 is a structural diagram illustrating a device for configuring frequency domain resource according to embodiments of the present disclosure.

FIG. 13 is a structural diagram illustrating a chip according to embodiments of the present disclosure.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with embodiments of the disclosure. Instead, they are merely examples of the apparatuses and methods consistent with some aspects of the embodiments of the disclosure as detailed in the appended claims.

Terms described in the embodiments of the disclosure are only for the purpose of describing specific embodiments, but should not be construed to limit the embodiments of the disclosure. As used in the embodiments of the disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although the terms such as "first", "second", "third", etc. may be used in embodiments of the disclosure to describe various information, these information should not be limited by these terms. These terms are only used to distinguish the same type of information from each other. For example, first information may also be referred to as second information, and similarly, the second information may also be referred to as the first information, without departing from the scope of embodiments of the disclosure. As used herein, the term "if' may be construed to mean "when" or "upon" or "in response to determining" depending on the context.

Description will be made in detail below to embodiments of the disclosure. Examples of embodiments are illustrated in the accompanying drawings, in which, the same or similar numbers represent the same or similar elements or elements with the same or similar functions. Embodiments described below with reference to the accompanying drawings are exemplary, which are intended to explain the disclosure and do not be understood a limitation of the disclosure.

In order to better understand a method for configuring frequency domain resources disclosed in the embodiments of the disclosure, firstly, description is made below to a communication system applicable to embodiments of the disclosure.

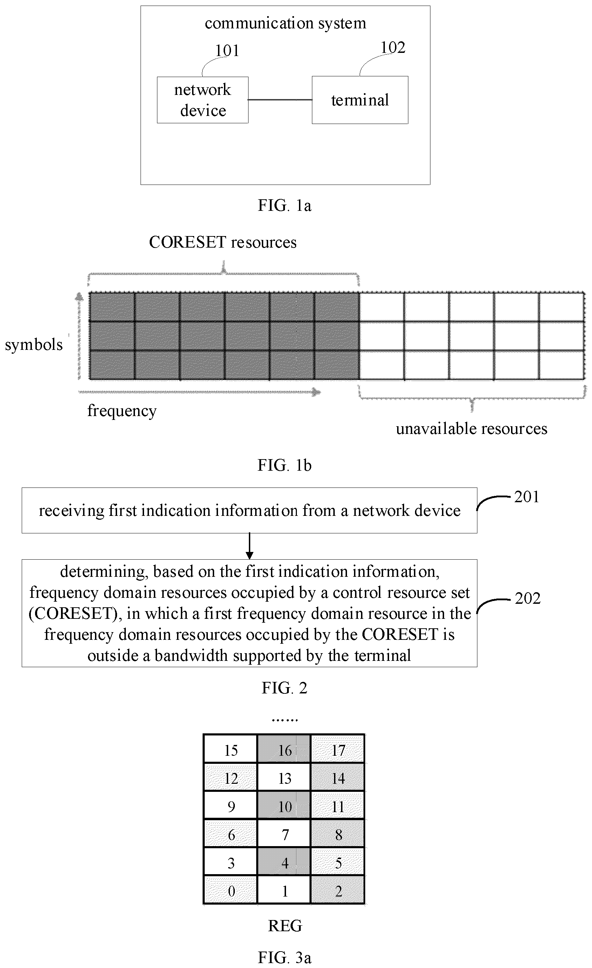

Referring to FIG, 1a, FIG. 1a is an architecture diagram illustrating a communication system according to embodiments of the disclosure. The communication system may include, but is not limited to, a first network device, a second network device, and a terminal. A number and form of devices illustrated in FIG. 1a are only used for example and do not constitute a limitation in embodiments of the disclosure, and two or more network devices and two or more terminals may be included in an actual application. The communication system illustrated in FIG. 1a takes an example of including one network device 101 and one terminal 102.

It should be noted that the technical solution of embodiments of the disclosure may be applied to various communication systems, such as, a long term evolution (LTE) system, a 5th generation (5G) mobile communication system, a 5G new radio (NR) system, or another future new mobile communication system.

The network device 101 in embodiments of the disclosure is an entity for sending or receiving a signal in a network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Detailed technologies and detailed device forms employed by the network device are not limited in embodiments of the disclosure. The network device according to embodiments of the disclosure may be combined by a central unit (CU) and a distributed unit (DU). The CU may also be referred to as a control unit. A protocol layer of the network device, such as a base station may be separated by employing a CU-DU structure, in which, part of functions of the protocol layer are centrally controlled by the CU, while part or all of remaining functions of the protocol layer are distributed in the DU. The DU is controlled by the CU.

The terminal 102 in embodiments of the disclosure is an entity for receiving or sending a signal in a user side, such as, a mobile phone. The terminal may also be referred to as a terminal device, a user equipment (UE), a mobile station (MS), a mobile terminal (MT), or the like, or may be a reduced capability UE (RedCap UE), an evolved reduced capability UE (eRedCap UE), or the like. The terminal may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Detailed technologies and detailed device forms employed by the terminal are not limited in embodiments of the disclosure.

In the related art, a CORESET for the terminal occupies 1 to 3 continuous symbols in a time domain, and frequency domain resources are configured in a way similar to a PDSCH resource allocation type 0 in a frequency domain. A basic granularity for allocating frequency domain resources is 6 resource blocks (RBs).

In Release 18, it is proposed that a bandwidth is further reduced for a RedCap terminal, to support a service type which is not high in data rate and is sensitive to manufacturing cost, such as a factory sensor. At the same time, configuration for sub-carrier spacings such as 15KHz and 30KHz may still be supported, resulting in a reduction in available frequency domain resources within a bandwidth range.

When the SCS is 30KHz, 11 available RBs merely exist at a bandwidth with 5MHz. If it is still employed the method of configuring frequency domain resources for a CORESET in the related art, where the frequency domain resources are configured for the CORESET with 6 RBs as a basic granularity, then some frequency domain resources in the bandwidth range may not be utilized all the time for a physical downlink control channel (PDCCH). As illustrated in FIG. 1b, FIG. 1b is a diagram illustrating configuring frequency domain resources in the related art according to embodiments of the disclosure. In this case, a number of REGs included in the CORESET may be reduced, and it is caused that a larger aggregation level may not be supported. As illustrated in FIG. 1b, a maximum aggregation level (AL) may be supported to be 2, thus affecting the coverage and the transmission performance of the PDCCH in a downlink transmission for the terminal.

It may be understood that the communication system described in embodiments of the disclosure is intended to explain the technical solution of embodiments of the disclosure more clearly, and does not constitute a limitation to the technical solution according to embodiments of the disclosure. The ordinary skill in the art knows that, with the evolution of a system architecture and the appearance of a new business scenario, the technical solution according to embodiments of the disclosure are also applied to a similar technical problem.

Description is made below in detail to the method and the apparatus for configuring frequency domain resources according to the disclosure with reference to the accompanying drawings.

Referring to FIG. 2, FIG. 2 is a flowchart illustrating a method for configuring frequency domain resources according to embodiments of the disclosure. It should be noted that the method for configuring frequency domain resources in embodiments of the disclosure is performed by a terminal. As illustrated in FIG. 2, the method may include the following steps at 201-202.

At 201, first indication information is received from a network device.

In embodiments of the disclosure, the terminal receives the indication information from the network device. The first indication information indicates the terminal to determine frequency domain resources occupied by a control resource set (CORESET).

Optionally, the first indication information includes at least one bit, and each bit of the first indication information may indicate whether a group of frequency domain resource units corresponding to the bit is the frequency domain resources occupied by the CORESET.

In these embodiments of the disclosure, the group of frequency domain resource units includes 6 frequency domain resource units. The frequency domain resource unit may be an RB, a physical resource block (PRB), a virtual resource block (VRB), a common resource block (CRB), or the like.

At 202, the frequency domain resources occupied by the CORESET are determined based on the first indication information, in which a first frequency domain resource in the frequency domain resources occupied by the CORESET is outside a bandwidth supported by the terminal.

In these embodiments of the disclosure, the terminal may determine the frequency domain resources occupied by the CORESET based on the first indication information, in which the frequency domain resources occupied by the CORESET may include frequency domain resources outside the bandwidth supported by the terminal. That is, CORESET resources indicated by the first indication information may exceed the bandwidth supported by the terminal.

It may be understood that the bandwidth in these embodiments of the disclosure may be a bandwidth (BW) or a bandwidth part (BWP).

In some implementations, the terminal may determine the first frequency domain resource based on second indication information. That is, the terminal may determine, based on the second indication information, which part of the frequency domain resources occupied by the CORESET indicated by the first indication information is outside the bandwidth supported by the terminal, so as to ensure that the transmission of PDCCH is within the bandwidth supported by the terminal as much as possible, thus improving the reliability of information transmission in the downlink channel.

Optionally, the second indication information includes at least one of: a number of PDCCH candidates, a number of resources occupied by the PDCCH candidates, a number of resource element groups (REGs) in a REG bundle, and a cyclic shift parameter of the REG.

The cyclic shift parameter of the REG may be represented by $n_{shift}$, which indicates a cyclic shift amount of a REG bundle when the REGs are interleaved and mapped to a CCE. A number of REGs in a REG bundle may be represented by a REG bundle size, which may be 2, 3, 6, etc. The cyclic shift parameter of REG and the number of REGs in the REG bundle may affect a mapping relationship between CCEs and REGs.

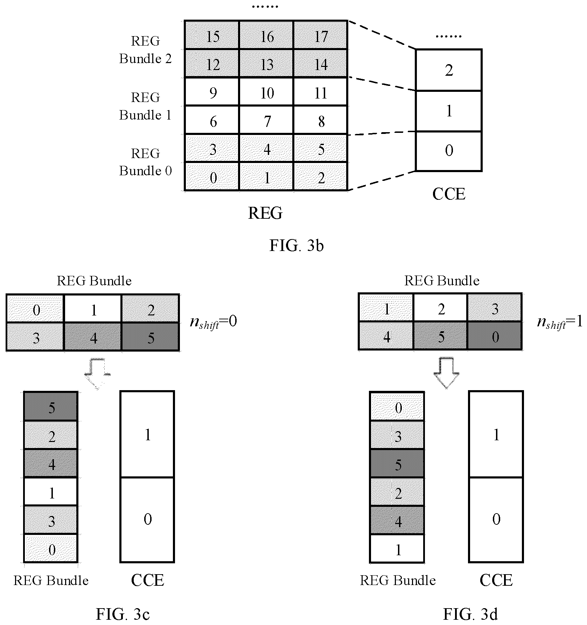

One REG occupies one RB in the frequency domain and one time domain symbol in the time domain. Within a CORESET, REGs are numbered in the time domain first and then in the frequency domain, as illustrated in FIG. 3a. FIG. 3a is a diagram illustrating numbering resource element groups (REGs) according to embodiments of the present disclosure. A plurality of continuous REGs in both the time domain and/or frequency domain form one REG bundle, and transmission within one bundle adopts the same precoding. That is, joint channel estimation may be performed for transmission within one bundle. One CCE occupies 6 REGs, CCE-to-REG mapping may be completed in an interleaved way and in a non-interleaved way. As illustrated in FIG. 3b, FIG. 3c and FIG. 3d, FIG. 3b is a diagram illustrating a control channel element (CCE)-to-REG non-interleaved mapping according to embodiments of the present disclosure, FIG. 3c and FIG. 3d each is a diagram illustrating a CCE-to-REG interleaved mapping according to embodiments of the present disclosure. In the interleaved mapping way, an interleaver is used to perform interleaving. As illustrated in FIG. 3c and FIG. 3d, the number L of REGs in each REG bundle is 2, the number R of rows of the interleaver is 2, the number $N_{REG}^{CORESET}$ of REGs included in a CORESET is 12, the number C of columns of the interleaver is 3, and each CCE corresponds to 3 REG bundles. The cyclic shift parameter $n_{shift}$ of REG in FIG. 3c is equal to 0, and the cyclic shift parameter $n_{shift}$ of REG in FIG. 3d is equal to 1.

In some implementations, the terminal may determine, based on each CCE index, a target CCE from at least one CCE to which the REG is mapped. The first frequency domain resource may be determined based on at least one frequency domain resource unit occupied by a REG frequency domain corresponding to the target CCE.

In some embodiments, the terminal may determine, based on the number of PDCCH candidates, at least one CCE that is not mapped to the PDCCH candidates and determine that a set number of frequency domain resource units corresponding to the at least one CCE that is not mapped to the PDCCH candidates are outside the bandwidth.

In some embodiments, the terminal aligns a frequency domain resource unit with a lowest frequency in the resources occupied by the CORESET indicated by the first indication information, with a frequency domain resource unit with a lowest frequency in the bandwidth supported by the terminal, or aligns a frequency domain resource unit with a highest frequency in the resources occupied by the CORESET, with a frequency domain resource unit with a highest frequency in the bandwidth supported by the terminal.

In summary, the first indication information is received from the network device, the frequency domain resources occupied by the CORESET are determined based on the first indication information, in which the first frequency domain resource in the frequency domain resources occupied by the CORESET is outside the bandwidth supported by the terminal. It is allowed that the frequency domain resources occupied by the CORESET for the terminal exceed the bandwidth supported by the terminal, so that the terminal can support a larger aggregation level as much as possible, which effectively improves a transmission performance of a downlink channel, enhances the coverage of the downlink channel, improves a system communication efficiency, effectively reduces a resource waste, and improves a resource utilization.

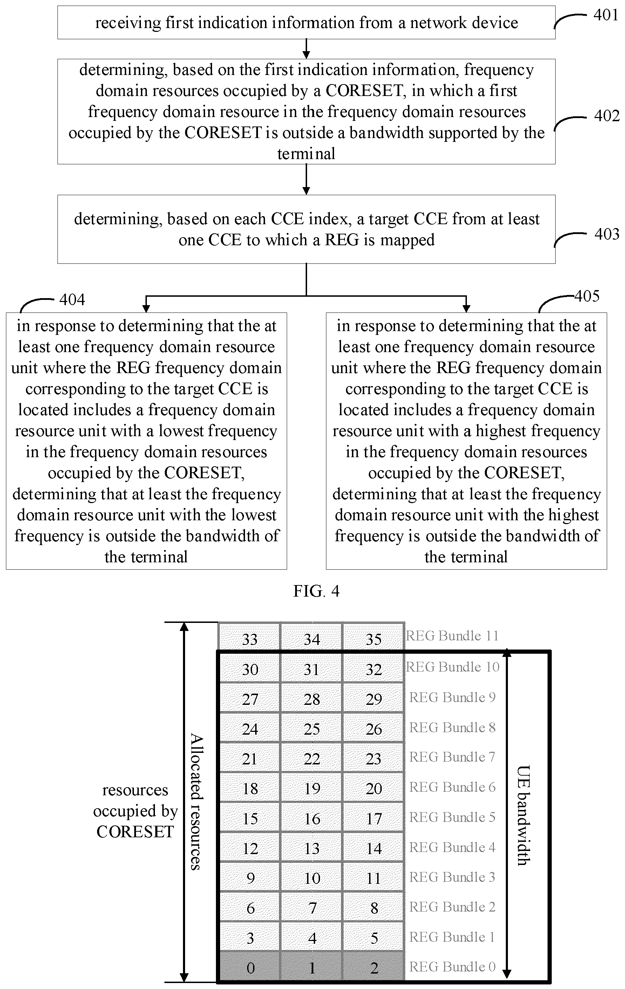

Referring to FIG, 4, FIG. 4 is a flowchart illustrating a method for configuring frequency domain resource according to embodiments of the present disclosure. It should be noted that the method for configuring frequency domain resources according to these embodiments of the disclosure is performed by a terminal. As illustrated in FIG. 4, the method may include the following steps at 401-405.

At 401, first indication information is received from a network device.

In these embodiments of the disclosure, the terminal receives the first indication information from the network device, in which the first indication information indicates the terminal to determine frequency domain resources occupied by a CORESET.

Optionally, the first indication information includes at least one bit, and each bit of the first indication information may indicate whether a group of frequency domain resource units corresponding to the bit is the frequency domain resources occupied by the CORESET.

In these embodiments of the disclosure, the group of frequency domain resource units includes 6 frequency domain resource units. The frequency domain resource unit may be an RB, a PRB, a VRB, a CRB, or the like.

At 402, the frequency domain resources occupied by the CORESET are determined based on the first indication information, in which a first frequency domain resource in the frequency domain resources occupied by the CORESET is outside a bandwidth supported by the terminal.

In these embodiments of the disclosure, the terminal may determine the frequency domain resources occupied by the CORESET based on the first indication information, in which the frequency domain resources occupied by the CORESET may include frequency domain resources outside the bandwidth supported by the terminal. That is, CORESET resources indicated by the first indication information may exceed the bandwidth supported by the terminal.

It may be understood that the bandwidth in these embodiments of the disclosure may be a BW or a BWP.

At 403, based on each CCE index, a target CCE is determined from at least one CCE to which the REG is mapped.

A REG frequency domain corresponding to the target CCE occupies at least one frequency domain resource unit.

In some implementations, the target CCE is a CCE with a maximum index after REG mapping.

In these embodiments of the disclosure, at least one REG within the CORESET may be determined based on the frequency domain resources occupied by the CORESET indicated by the first indication information and the number of symbols occupied by the CORESET in the time domain configured by the network device. A mapping relationship between at least one REG and at least one CCE may be determined based on a number of REGs (i.e., a REG bundle size) included in the REG bundle, a cyclic shift parameter $n_{shift}$ of the REG during interleaving mapping, a number of rows of an interleaver, etc.

It may be understood that in these embodiments of the disclosure, if the REG-to-CCE mapping is non-interleaved and all REG bundles may be mapped to a CCE, then the REG of the frequency domain resource unit with the highest frequency in the frequency domain resources occupied by the CORESET may inevitably correspond to the CCE with the maximum index in at least one CCE to be mapped.

If the REG-to-CCE mapping is interleaved, the REG-to-CCE mapping way may be different depending on the above-mentioned related parameters (i.e., the number of REGs included in the REG bundle, the cyclic shift parameter $n_{shift}$ of REG during interleaving mapping, the number of rows of the interleaver, etc.).

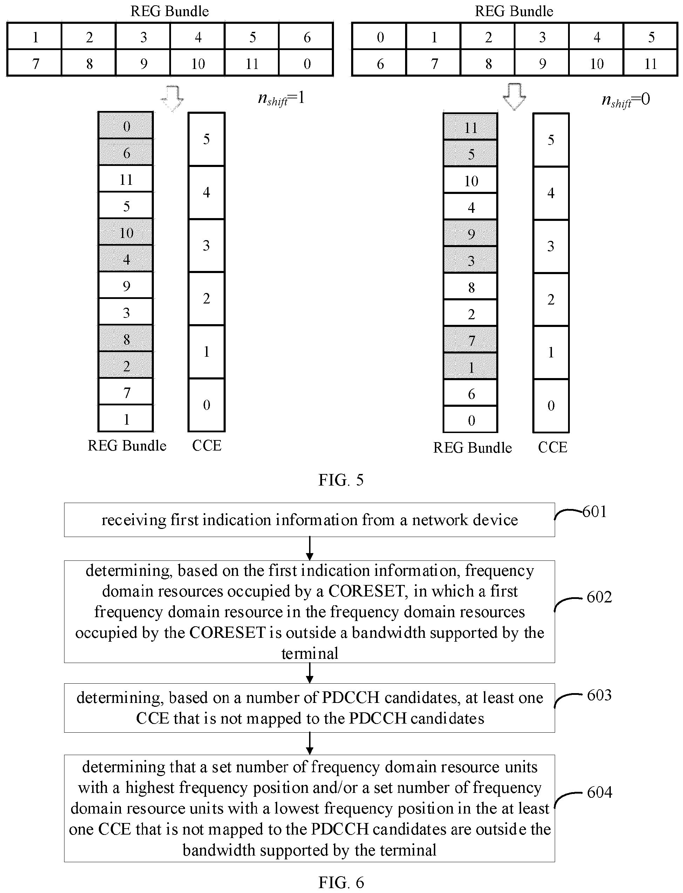

As an example, referring to FIG. 5, FIG. 5 is a diagram illustrating a CCE-to-REG interleaved mapping according to embodiments of the present disclosure. As illustrated in FIG. 5, the first indication information indicates that the CORESET occupies 12 frequency domain resource units in the frequency domain, the CORESET configured by the network device occupies 3 symbols in the time domain, i.e., REG bundle size is equal to 3, and the bandwidth supported by the terminal includes 11 frequency domain resource units. 3 REGs corresponding to 1 frequency domain resource unit in the frequency domain are 1 REG bundle, and the REGs within the CORESET are numbered in the time domain first and then in the frequency domain. For example, in FIG. 5, REGs numbered 0, 1, and 2 constitute REG bundle 0, REGs numbered 3, 4, and 5 constitute REG bundle 1, and REGs numbered 6, 7, and 8 constitute the REG bundle 2. The same way is applied to other REG bundles. The resources occupied by the CORESET include 36 REGs and 12 REG bundles.

If the cyclic shift parameter $n_{shift}$ is equal to 1 of REG and the number of rows in the interleaver is 2, after interleaving mapping, as illustrated in FIG. 5, REG bundle 1 and REG bundle 7 correspond to CCE#0, REG bundle 2 and REG bundle 8 correspond to CCE#1, REG bundle 3 and REG bundle 9 correspond to CCE#2, REG bundle 4 and REG bundle 10 correspond to CCE#3, REG bundle 5 and REG bundle 11 correspond to CCE#4, and REG bundle 6 and REG bundle 0 correspond to CCE#5.

If the cyclic shift parameter $n_{shift}$ is equal to 0 of REG and the number of rows in the interleaver is 2, after interleaving mapping, as illustrated in FIG. 5, REG bundle 0 and REG bundle 6 correspond to CCE#0, REG bundle 1 and REG bundle 7 correspond to CCE#1, REG bundle 2 and REG bundle 8 correspond to CCE#2, REG bundle 3 and REG bundle 9 correspond to CCE#3, REG bundle 4 and REG bundle 10 correspond to CCE#4, and REG bundle 5 and REG bundle 11 correspond to CCE#5.

In some implementations, the target CCE is the CCE with the maximum index after REG mapping, that is, CCE#5. In this example, when the cyclic shift parameter $n_{shift}$ of the REG is equal to 1, REGs corresponding to the target CCE (CCE#5) are REGs numbered 0, 1, 2 (REG bundle 0) and REGs numbered 18, 19, 20 (REG bundle 6); when the cyclic shift parameter $n_{shift}$ of the REG is equal to 0, REGs corresponding to the target CCE (CCE#5) is REGs numbered 15, 16, 17 (REG bundle 5) and REGs numbered 33, 34, 35 (REG bundle 11).

The REGs corresponding to the target CCE occupy at least one frequency domain resource unit in the frequency domain. In this example, when the cyclic shift parameter $n_{shift}$ of the REG is equal to 1, the REGs corresponding to the target CCE occupy two frequency domain resource units where REG bundle 0 and REG bundle 6 are located in the frequency domain; when the cyclic shift parameter $n_{shift}$ of the REG is equal to 0, the REGs corresponding to the target CCE occupy two frequency domain resource units where REG bundle 5 and REG bundle 11 are located in the frequency domain.

At 404, in response to determining that the at least one frequency domain resource unit where the REG frequency domain corresponding to the target CCE is located includes a frequency domain resource unit with a lowest frequency in the frequency domain resources occupied by the CORESET, it is determined that at least the frequency domain resource unit with the lowest frequency is outside the bandwidth supported by the terminal.

In these embodiments of the disclosure, if at least one frequency domain resource unit in the REG frequency domain corresponding to the target CCE includes the frequency domain resource unit with the lowest frequency in the frequency domain resources occupied by the CORESET (that is, the frequency domain resource unit with the lowest frequency in the frequency domain resources indicated by the first indication information), it is determined that at least the frequency domain resource unit with the lowest frequency is outside the bandwidth supported by the terminal.

As an example, as mentioned above, when the cyclic shift parameter $n_{shift}$ of the REG is equal to 1, the REGs corresponding to the target CCE (CCE#5) are the REGs numbered 0, 1, 2 (REG bundle 0) and the REGs numbered 18, 19, 20 (REG bundle 6). The REGs corresponding to the target CCE occupies the two frequency domain resource units where REG bundle 0 and REG bundle 6 are located in the frequency domain. The frequency domain resource unit where REG bundle 0 is located is the frequency domain resource unit with the lowest frequency in the frequency domain resources occupied by the CORESET, and it is determined that at least the frequency domain resource unit with the lowest frequency is outside the bandwidth supported by the terminal. That is, it is determined that at least the frequency domain resource unit where REG bundle 0 is located is outside the bandwidth supported by the terminal. In this example, the resources configured for the CORESET occupy 12 frequency domain resource units in the frequency domain, and the bandwidth supported by the terminal includes 11 frequency domain resource units. Therefore, it is only needed to determine that 1 frequency domain resource unit (the frequency domain resource unit where the REG bundle 0 is located) is outside the bandwidth supported by the terminal.

In some examples, if a difference between a number of frequency domain resource units occupied by the resources configured for the CORESET in the frequency domain and a number of frequency domain resource units included in the bandwidth supported by the terminal is N (N>1, N is a positive integer), then it is determined that first N frequency domain resource units sorted from low to high in frequency are outside the bandwidth supported by the terminal (which necessarily include the frequency domain resource unit with the lowest frequency).

At 405, in response to determining that the at least one frequency domain resource unit where the REG frequency domain corresponding to the target CCE is located includes a frequency domain resource unit with a highest frequency in the frequency domain resources occupied by the CORESET, it is determined that at least the frequency domain resource unit with the highest frequency is outside the bandwidth supported by the terminal.

In these embodiments of the disclosure, if the at least one frequency domain resource unit in the REG frequency domain corresponding to the target CCE includes the frequency domain resource unit with the highest frequency in the frequency domain resources occupied by the CORESET (that is, the frequency domain resource unit with the highest frequency in the frequency domain resources indicated by the first indication information), it is determined that at least the frequency domain resource unit with the highest frequency is outside the bandwidth supported by the terminal.

As an example, as mentioned above, when the cyclic shift parameter $n_{shift}$ of the REG is equal to 0, the REGs corresponding to the target CCE (CCE#5) are REGs numbered 15, 16, 17 (REG bundle 5) and REGs numbered 33, 34, 35 (REG bundle 11). The REGs corresponding to the target CCE occupy the two frequency domain resource units where REG bundle 5 and REG bundle 11 are located in the frequency domain. The frequency domain resource unit where REG bundle 11 is located is the frequency domain resource unit with the highest frequency in the frequency domain resources occupied by the CORESET, and it is determined that at least the frequency domain resource unit with the highest frequency is outside the bandwidth supported by the terminal. That is, it is determined that at least the frequency domain resource unit where REG bundle 11 is located is outside the bandwidth supported by the terminal. In this example, the resources configured for the CORESET occupy 12 frequency domain resource units in the frequency domain, and the bandwidth supported by the terminal includes 11 frequency domain resource units. Therefore, it is only needed to determine that 1 frequency domain resource unit (the frequency domain resource unit where the REG bundle 11 is located) is outside the bandwidth supported by the terminal.

In some examples, if the number of frequency domain resource units occupied by the resources configured for the CORESET in the frequency domain is N (N>1, N is a positive integer) more than the number of frequency domain resource units included in the bandwidth supported by the terminal, then it is determined that the first N frequency domain resource units sorted from high to low in frequency are outside the bandwidth supported by the terminal (which necessarily include the frequency domain resource unit with the highest frequency).

In summary, the first indication information is received from the network device, the frequency domain resources occupied by the CORESET are determined based on the first indication information, in which the first frequency domain resource in the frequency domain resources occupied by the CORESET is outside the bandwidth supported by the terminal; the target CCE is determined based on each CCE index from at least one CCE to which the resource particle group REG is mapped; the frequency domain resource unit outside the bandwidth supported by the terminal is determined based on whether the at least one frequency domain resource unit in the REG frequency domain corresponding to the target CCE includes either the frequency domain resource unit with the lowest frequency or the frequency domain resource unit with the highest frequency in the frequency domain resources occupied by the CORESET. It is allowed that the frequency domain resources occupied by the CORESET for the terminal exceed the bandwidth supported by the terminal, so that the terminal can support the larger aggregation level as much as possible, which effectively improves the transmission performance of the downlink channel, enhances the coverage of the downlink channel, improves the system communication efficiency. It may be tried to ensure that the transmission of the downlink channel is within the bandwidth supported by the terminal, which improves the reliability of communication transmission, effectively reduces the resource waste, and improves the resource utilization.

Referring to FIG. 6, FIG. 6 is a flowchart illustrating a method for configuring frequency domain resource according to embodiments of the present disclosure. It should be noted that the method for configuring frequency domain resources according to the embodiments of the disclosure is performed by a terminal. As illustrated in FIG. 6, the method may include the following steps at 601-603.

At 601, first indication information is received from a network device.

In these embodiments of the disclosure, the terminal receives the indication information from the network device. The first indication information indicates the terminal to determine frequency domain resources occupied by a CORESET.

Optionally, the first indication information includes at least one bit, and each bit of the first indication information may indicate whether a group of frequency domain resource units corresponding to the bit is the frequency domain resources occupied by the CORESET.

In these embodiments of the disclosure, the group of frequency domain resource units includes 6 frequency domain resource units. The frequency domain resource unit may be an RB, a PRB, a VRB, a CRB, or the like.

At 602, the frequency domain resources occupied by the CORESET are determined based on the first indication information, in which a first frequency domain resource in the frequency domain resources occupied by the CORESET is outside a bandwidth supported by the terminal.

In these embodiments of the disclosure, the terminal may determine the frequency domain resources occupied by the CORESET based on the first indication information, in which the frequency domain resources occupied by the CORESET may include frequency domain resources outside the bandwidth supported by the terminal. That is, CORESET resources indicated by the first indication information may exceed the bandwidth supported by the terminal.

It may be understood that the bandwidth in these embodiments of the disclosure may be a BW or a BWP.

At 603, at least one CCE that is not mapped to PDCCH candidates is determined based on a number of PDCCH candidates.

In these embodiments of the disclosure, it is possible to determine at least one CCE that is not mapped to the PDCCH candidates based on the number of PDCCH candidates, and then determine the frequency domain resources outside the bandwidth range supported by the terminal based on the at least one CCE that is not mapped to the PDCCH candidates.

Several CCEs are aggregated into a PDCCH. The number of CCEs aggregated into a PDCCH is an aggregation level (AL). All resources that may be PDCCHs are called PDCCH candidates.

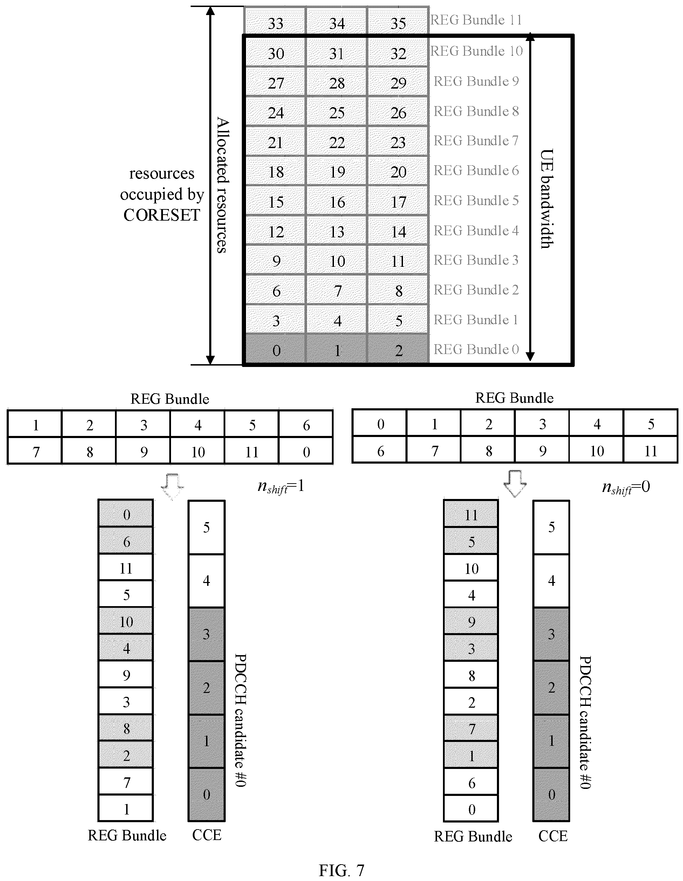

As an example, referring to FIG. 7, FIG. 7 is a diagram illustrating a CCE-to-REG interleaved mapping according to embodiments of the present disclosure. As illustrated in FIG. 7, the first indication information indicates that the CORESET occupies 12 frequency domain resource units in the frequency domain, the CORESET configured by the network device occupies 3 symbols in the time domain, i.e., REG bundle size is equal to 3, and the bandwidth supported by the terminal includes 11 frequency domain resource units. 3 REGs corresponding to 1 frequency domain resource unit in the frequency domain are 1 REG bundle, and the REGs in the CORESET are numbered in the time domain first and then in the frequency domain. As illustrated in FIG. 7, REGs numbered 0, 1, and 2 constitute REG bundle 0, REGs numbered 3, 4, and 5 constitute REG bundle 1, and REGs numbered 6, 7, and 8 constitute REG bundle 2. The same way is applied to other REG bundles. The resources occupied by the CORESET include 36 REGs and 12 REG bundles. In this example, the number of PDCCH candidates is equal to 1, and the AL is equal to 4.

In this example, the resources occupied by the CORESET include 36 REGs, each CCE corresponds to 6 REGs, and thus the resources occupied by the CORESET include 6 CCEs. In this example, the number of PDCCH candidates is 1, the AL=4, it is determined that CCE#0-CCE#3 are mapped to PDCCH candidate#0, and it is determined that at least one CCE that is not mapped to the PDCCH candidates is CCE#4 and CCE#5.

It may be understood that in these embodiments of the disclosure, this example is only used as an illustrative way to determine at least one CCE that is not mapped to the PDCCH candidates. Other ways can also be used to determine the CCEs in the PDCCH candidate and at least one CCE that is not mapped to the PDCCH candidates based on a requirement for the communication system and a protocol agreement, which is not limited herein.

At 604, it is determined that in the frequency domain resource units corresponding to at least one CCE that is not mapped to the PDCCH candidates, a set number of frequency domain resource units with a highest frequency position and/or a set number of frequency domain resource units with a lowest frequency position are outside the bandwidth supported by the terminal.

The set number is determined based on the number of frequency domain resource units occupied by the CORESET in the frequency domain indicated by the first indication information, and the number of frequency domain resource units included in the bandwidth supported by the terminal.

It may be understood that the set number of frequency domain resource units with the highest frequency position refers to the first set number of frequency domain resource units sorted from high to low in frequency, or the last set number of frequency domain resource units sorted from low to high in frequency; the set number of frequency domain resource units with the lowest frequency position refers to the last set number of frequency domain resource units sorted from high to low in frequency, or the first set number of frequency domain resource units sorted from low to high in frequency.

In some embodiments, the set number is a difference between the number of frequency domain resource units occupied by the resources configured for the CORESET in the frequency domain and a number of frequency domain resource units included in the bandwidth supported by the terminal. That is, the set number N is equal to the number of frequency domain resource units occupied by the resources configured for the CORESET in the frequency domain subtracted from the number of frequency domain resource units included in the bandwidth supported by the terminal.

As a first possible implementation, in the frequency domain resource units corresponding to at least one CCE that is not mapped to the PDCCH candidate, the first N frequency domain resource units sorted in frequency are outside the bandwidth supported by the terminal. Optionally, the frequency sorting may be from low to high, or from high to low.

As a second possible implementation, in the frequency domain resource units corresponding to at least one CCE that is not mapped to the PDCCH candidates, the last N frequency domain resource units sorted in frequency are outside the bandwidth supported by the terminal. Optionally, the frequency sorting may be from low to high, or from high to low.

As a third possible implementation, in the frequency domain resource units corresponding to at least one CCE that is not mapped to the PDCCH candidates, the first m frequency domain resource units and the last (N-m) frequency domain resource units sorted in frequency are outside the bandwidth supported by the terminal. Optionally, the frequency sorting may be from low to high, or from high to low. m is a natural number.

As an example, as mentioned above, if the cyclic shift parameter $n_{shift}$ is equal to 1 of REG, the number of rows in the interleaver is 2, after interleaving mapping, as illustrated in FIG. 7, REG bundle 1 and REG bundle 7 correspond to CCE#0, REG bundle 2 and REG bundle 8 correspond to CCE#1, REG bundle 3 and REG bundle 9 correspond to CCE#2, REG bundle 4 and REG bundle 10 correspond to CCE#3, REG bundle 5 and REG bundle 11 correspond to CCE#4, and REG bundle 6 and REG bundle 0 correspond to CCE#5.

If the cyclic shift parameter $n_{shift}$ is equal to 0 of REG and the number of rows in the interleaver is 2, after interleaving mapping, as illustrated in FIG. 7, REG bundle 0 and REG bundle 6 correspond to CCE#0, REG bundle 1 and REG bundle 7 correspond to CCE#1, REG bundle 2 and REG bundle 8 correspond to CCE#2, REG bundle 3 and REG bundle 9 correspond to CCE#3, REG bundle 4 and REG bundle 10 correspond to CCE#4, and REG bundle 5 and REG bundle 11 correspond to CCE#5.

In this example, the difference N between the number of frequency domain resource units occupied by the resources configured for the CORESET in the frequency domain and the number of frequency domain resource units included in the bandwidth supported by the terminal is equal to 1.

If the cyclic shift parameter $n_{shift}$ of the REG is equal to 1, frequency domain resource units corresponding to at least one CCE (CCE#4 and CCE#5) that is not mapped to the PDCCH candidates are frequency domain resource units where REG bundle 5, REG bundle 11, REG bundle 6 and REG bundle 0 are located. In this example, it may be determined that the frequency domain resource unit where REG bundle 0 is located is outside the bandwidth supported by the terminal, and it may also be determined that the frequency domain resource unit where REG bundle 11 is located is outside the bandwidth supported by the terminal.

If the cyclic shift parameter $n_{shift}$ of the REG is equal to 0, frequency domain resource units corresponding to at least one CCE (CCE#4 and CCE#5) that is not mapped to the PDCCH candidates are frequency domain resource units where REG bundle 4, REG bundle 10, REG bundle 5 and REG bundle 11 are located. In this example, it is determined that the frequency domain resource unit where the REG bundle 11 is located is outside the bandwidth supported by the terminal.

In some examples, if N>1, N is a positive integer, for example, the bandwidth supported by the terminal includes 10 frequency domain resource units, then N is equal to 2. If the cyclic shift parameter $n_{shift}$ of the REG is equal to 1, in this example, it may be determined that the frequency domain resource units where the REG bundle 0 and the REG bundle 11 are located are outside the bandwidth supported by the terminal. If the cyclic shift parameter $n_{shift}$ of the REG is equal to 0, in this example, it may be determined that the frequency domain resource units where the REG bundle 10 and the REG bundle 11 are located are outside the bandwidth supported by the terminal.

In summary, the first indication information is received from the network device, the frequency domain resources occupied by the CORESET are determined based on the first indication information, in which the first frequency domain resource in the frequency domain resources occupied by the CORESET is outside the bandwidth supported by the terminal; the at least one CCE not mapped to the PDCCH candidates is determined based on the number of PDCCH candidates, and it is determined that in the frequency domain resource units corresponding to the at least one CCE not mapped to the PDCCH candidates, the set number of frequency domain resource units with the highest frequency position and/or the set number of frequency domain resource units with the lowest frequency position are outside the bandwidth supported by the terminal. It is allowed that the frequency domain resources occupied by the CORESET for the terminal exceed the bandwidth supported by the terminal, so that the terminal can support the larger aggregation level as much as possible, which effectively improves the transmission performance of the downlink channel, enhances the coverage of the downlink channel, improves the system communication efficiency. It may be tried to ensure that the transmission of the downlink channel is within the bandwidth supported by the terminal, which improves the reliability of communication transmission, effectively reduces the resource waste, and improves the resource utilization.

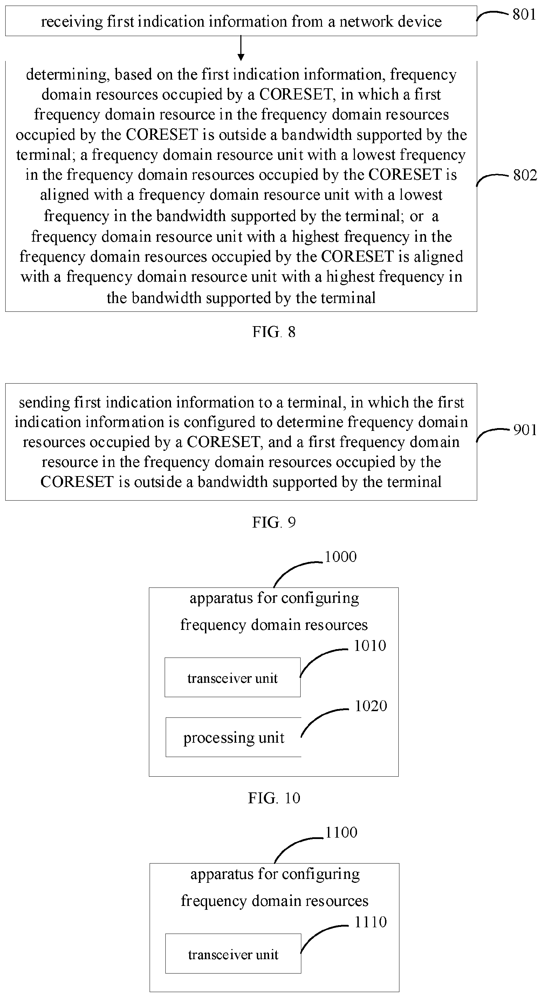

Referring to FIG. 8, FIG. 8 is a flowchart illustrating a method for configuring frequency domain resource according to embodiments of the present disclosure. It should be noted that the method for configuring frequency domain resources according to the embodiments of the disclosure is performed by a terminal. As illustrated in FIG. 8, the method may include the following steps at 801-802.

At 801, first indication information is received from a network device.

In these embodiments of the disclosure, the terminal receives the indication information from the network device. The first indication information indicates the terminal to determine frequency domain resources occupied by a CORESET.

Optionally, the first indication information includes at least one bit, and each bit of the first indication information may indicate whether a group of frequency domain resource units corresponding to the bit is the frequency domain resources occupied by the CORESET.

In these embodiments of the disclosure, the group of frequency domain resource units includes 6 frequency domain resource units. The frequency domain resource unit may be an RB, a PRB, a VRB, a CRB, or the like.

At 802, the frequency domain resources occupied by the CORESET are determined based on the first indication information, in which a first frequency domain resource in the frequency domain resources occupied by the CORESET is outside a bandwidth supported by the terminal; a frequency domain resource unit with a lowest frequency in the frequency domain resources occupied by the CORESET is aligned with a frequency domain resource unit with a lowest frequency in the bandwidth supported by the terminal; or a frequency domain resource unit with a highest frequency in the frequency domain resources occupied by the CORESET is aligned with a frequency domain resource unit with a highest frequency in the bandwidth supported by the terminal.

In these embodiments of the disclosure, the terminal may determine the frequency domain resources occupied by the CORESET based on the first indication information, in which the frequency domain resources occupied by the CORESET may include frequency domain resources outside the bandwidth supported by the terminal. That is, CORESET resources indicated by the first indication information may exceed the bandwidth supported by the terminal.

It may be understood that the bandwidth in these embodiments of the disclosure may be a BW or a BWP.

In these embodiments of the disclosure, as a first possible implementation, the frequency domain resource unit with the lowest frequency in the frequency domain resources occupied by the CORESET is aligned with the frequency domain resource unit with the lowest frequency in the bandwidth supported by the terminal. That is, a start frequency domain resource unit indicated by the first indication information is the first frequency domain resource unit of the bandwidth supported by the terminal from low to high in frequency.

As a second possible implementation, the frequency domain resource unit with the highest frequency in the frequency domain resources occupied by the CORESET is aligned with the frequency domain resource unit with the highest frequency in the bandwidth supported by the terminal. That is, an end frequency domain resource unit indicated by the first indication information is the last frequency domain resource unit of the bandwidth supported by the terminal from low to high in frequency.

In summary, the first indication information is received from the network device, the frequency domain resources occupied by the CORESET are determined based on the first indication information, in which the first frequency domain resource in the frequency domain resources occupied by the CORESET is outside the bandwidth supported by the terminal; the frequency domain resource unit with the lowest frequency in the frequency domain resources occupied by the CORESET is aligned with the frequency domain resource unit with the lowest frequency in the bandwidth supported by the terminal, or the frequency domain resource unit with the highest frequency in the frequency domain resources occupied by the CORESET is aligned with the frequency domain resource unit with the highest frequency in the bandwidth supported by the terminal. It is allowed that the frequency domain resources occupied by the CORESET for the terminal exceed the bandwidth supported by the terminal, so that the terminal can support a larger aggregation level as much as possible, which effectively improves the transmission performance of the downlink channel, enhances the coverage of the downlink channel, improves the system communication efficiency, effectively reduces the resource waste, and improves the resource utilization.

It should be noted that as the resource configuration way of CORESET#0 is different from that of other CORESETs, in each embodiment of the disclosure, if the CORESET is CORESET#0, the first indication information is remaining minimum system message (RMSI), and the RMSI signaling is configured to determine a frequency domain resource length for the CORESET#0 and a corresponding number of symbols for the CORESET#0 from at least one combination of a frequency domain resource length and a corresponding number of symbols agreed by a protocol.

As an example, when the SCS is 30KHz, the at least one combination of the frequency domain resource length and the corresponding number of symbols agreed by the protocol may be illustrated in the following table.

Table 1 configuration of the frequency domain resource length and the corresponding symbol number for the CORESET#0

| frequency domain resource length / Number of RBs | Number of symbols |
| --- | --- |
| 10 | 3 |
| 8 | 3 |
| 6 | 3 |
| 6 | 2 |
| 6 | 1 |

In order to improve the resource utilization, reduce the unnecessary resource waste, and improve the transmission efficiency and quality, when the combination of the frequency domain resource length and the corresponding number of symbols is designed for the CORESET#0, it is possible to try to ensure that the frequency domain resource length does not exceed the bandwidth supported by the terminal, and a number of REGs (that is, a product of a number of RBs and a number of symbols) included in a combination of the frequency domain resource length and the corresponding number of symbols is an integer multiple of 6, etc.

It may be understood that the table is only used as an example, and some possible combinations of frequency domain resource lengths and corresponding numbers of symbols for the CORESET#0 are given by way of example. More combinations can also be designed to meet and adapt to more scenarios and bandwidth requirements. The table is only used as an example and does not limit the embodiments of the disclosure.

Referring to FIG. 9, FIG. 9 is a flowchart illustrating a method for configuring frequency domain resource according to embodiments of the present disclosure. It should be noted that the method for configuring frequency domain resources according to the embodiments of the disclosure is performed by a network device. As illustrated in FIG. 9, the method may include the following step at 901.

At 901, first indication information is sent to a terminal, in which the first indication information is configured to determine frequency domain resources occupied by a CORESET, and a first frequency domain resource in the frequency domain resources occupied by the CORESET is outside a bandwidth supported by the terminal.

In these embodiments of the disclosure, the network device sends the first indication information to the terminal, in which the first indication information indicates the terminal to determine the frequency domain resources occupied by the CORESET.

Optionally, the first indication information includes at least one bit, and each bit of the first indication information may indicate whether a group of frequency domain resource units corresponding to the bit is the frequency domain resources occupied by the CORESET.

In these embodiments of the disclosure, the group of frequency domain resource units includes 6 frequency domain resource units. The frequency domain resource unit may be an RB, a PRB, a VRB, a CRB, or the like.

In these embodiments of the disclosure, the terminal may determine the frequency domain resources occupied by the CORESET based on the first indication information, in which the frequency domain resources occupied by the CORESET may include frequency domain resources outside the bandwidth supported by the terminal. That is, the CORESET resources indicated by the first indication information may exceed the bandwidth supported by the terminal.

It may be understood that the bandwidth in these embodiments of the disclosure may be a BW or a BWP.

In some embodiments, the terminal aligns a frequency domain resource unit with a lowest frequency in the resources occupied by the CORESET indicated by the first indication information, with a frequency domain resource unit with a lowest frequency in the bandwidth supported by the terminal, or aligns a frequency domain resource unit with a highest frequency in the resources occupied by the CORESET, with a frequency domain resource unit with a highest frequency in the bandwidth supported by the terminal.

In some implementations, the terminal may determine, based on each CCE index, a target CCE from at least one CCE to which the REG is mapped. The first frequency domain resource may be determined based on at least one frequency domain resource unit occupied by a REG frequency domain corresponding to the target CCE.

In some embodiments, the terminal may determine, based on the number of PDCCH candidates, at least one CCE that is not mapped to the PDCCH candidates and determine that a set number of frequency domain resource units corresponding to the at least one CCE that is not mapped to the PDCCH candidates are outside the bandwidth.

In an embodiment of the disclosure, if the CORESET is CORESET#0, the first indication information is RMSI, and a RMSI signaling is configured to determine a frequency domain resource length and a corresponding number of symbols for the CORESET#0 from at least one combination of a frequency domain resource length and a corresponding number of symbols agreed by the protocol.

In summary, the first indication information is sent to the terminal, in which the first indication information is configured to determine the frequency domain resources occupied by the CORESET; the first frequency domain resource in the frequency domain resources occupied by the CORESET is outside the bandwidth supported by the terminal. It is allowed that the frequency domain resources occupied by the CORESET for the terminal exceed the bandwidth supported by the terminal, so that the terminal can support a larger aggregation level as much as possible, which effectively improves the transmission performance of the downlink channel, enhances the coverage of the downlink channel, improves the system communication efficiency, effectively reduces the resource waste, and improves the resource utilization.

Corresponding to the methods for configuring frequency domain resources according to the above several embodiments, apparatuses for configuring frequency domain resources are further provided in the disclosure. Since the apparatuses for configuring frequency domain resources according to the embodiment of the disclosure corresponds to the methods according to the above several embodiments, implementations of the method for configuring frequency domain resources are also applicable to the apparatuses for configuring frequency domain resources according to the following embodiments, which are not repeated in detail in the following embodiments.

Referring to FIG. 10, FIG. 10 is a structural diagram illustrating an apparatus for configuring frequency domain resource according to embodiments of the present disclosure.

As illustrated in FIG. 10, the apparatus 1000 for configuring frequency domain resource includes: a transceiver unit 1010 and a processing unit 1020.

The transceiver unit 1010 is configured to receive first indication information from a network device.

The processing unit 1020 is configured to determine, based on the first indication information, frequency domain resources occupied by a CORESET, in which a first frequency domain resource in the frequency domain resources occupied by the CORESET is outside a bandwidth supported by the terminal.

Optionally, the processing unit 1020 is further configured to: determine, based on second indication information, the first frequency domain resource outside the bandwidth supported by the terminal from the frequency domain resources occupied by the CORESET.

The second indication information includes at least one of: a number of PDCCH candidates, a number of REGs in a REG bundle, and a cyclic shift parameter of the REG.

Optionally, the processing unit 1020 is specifically configured to:

determine, based on each CCE index, a target CCE from at least one CCE to which the REG is mapped, in which a REG frequency domain corresponding to the target CCE occupies at least one frequency domain resource unit;
in response to determining that the at least one frequency domain resource unit where the REG frequency domain corresponding to the target CCE is located includes a frequency domain resource unit with a lowest frequency in the frequency domain resources occupied by the CORESET, determine that at least the frequency domain resource unit with the lowest frequency is the first frequency domain resource outside the bandwidth supported by the terminal;
in response to determining that the at least one frequency domain resource unit where the REG frequency domain corresponding to the target CCE is located includes a frequency domain resource unit with a highest frequency in the frequency domain resources occupied by the CORESET, determine that at least the frequency domain resource unit with the highest frequency is the first frequency domain resource outside the bandwidth supported by the terminal.

Optionally, the processing unit 1020 is specifically configured to:

determine, based on the number of PDCCH candidates, at least one CCE that is not mapped to the PDCCH candidates; and
determine that a set number of frequency domain resource units with a highest frequency position and/or a set number of frequency domain resource units with a lowest frequency position in the at least one CCE that is not mapped to the PDCCH candidates are the first frequency domain resource outside the bandwidth supported by the terminal.

Optionally, a frequency domain resource unit with a lowest frequency in the frequency domain resources occupied by the CORESET is aligned with a frequency domain resource unit with a lowest frequency in the bandwidth supported by the terminal; or

a frequency domain resource unit with a highest frequency in the frequency domain resources occupied by the CORESET is aligned with a frequency domain resource unit with a highest frequency in the bandwidth supported by the terminal.

Optionally, the CORESET is CORESET#0, the first indication information is RMSI, and the first indication information is configured to determine a frequency domain resource length for the CORESET#0 and a corresponding number of symbols for the CORESET#0 from at least one combination of a frequency domain resource length and a corresponding number of symbols agreed by a protocol.

According to the apparatus for configuring frequency domain resources in these embodiments, the frequency domain resources occupied by the CORESET may be determined based on the first indication information by receiving the first indication information from the network device, in which the first frequency domain resource in the frequency domain resources occupied by the CORESET is outside the bandwidth supported by the terminal. It is allowed that the frequency domain resources occupied by the CORESET for the terminal exceed the bandwidth supported by the terminal, so that the terminal can support a larger aggregation level as much as possible, which effectively improves the transmission performance of the downlink channel, enhances the coverage of the downlink channel, improves the system communication efficiency, effectively reduces the resource waste, and improves the resource utilization.

Referring to FIG. 11, FIG. 11 is a structural diagram illustrating an apparatus for configuring frequency domain resource according to embodiments of the present disclosure.

As illustrated in FIG. 11, the apparatus 1100 for configuring frequency domain resource includes a transceiver unit 1110.

The transceiver unit 1110 is configured to send first indication information to a terminal.

The first indication information is configured to determine frequency domain resources occupied by a CORESET, and the first frequency domain resource in the frequency domain resources occupied by the CORESET is outside a bandwidth supported by the terminal.

Optionally, a frequency domain resource unit with a lowest frequency in the frequency domain resources occupied by the CORESET is aligned with a frequency domain resource unit with a lowest frequency in the bandwidth supported by the terminal; or

a frequency domain resource unit with a highest frequency in the frequency domain resources occupied by the CORESET is aligned with a frequency domain resource unit with a highest frequency in the bandwidth supported by the terminal.

Optionally, the CORESET is CORESET#0, the first indication information is RMSI, and the first indication information is configured to determine a frequency domain resource length for the CORESET#0 and a corresponding number of symbols for the CORESET#0 from at least one combination of a frequency domain resource length and a corresponding number of symbols agreed by a protocol.

According to the apparatus for configuring frequency domain resources in these embodiments, the first indication information may be sent to the terminal, and the first indication information is configured to determine the frequency domain resources occupied by the CORESET; the first frequency domain resource in the frequency domain resources occupied by the CORESET is outside the bandwidth supported by the terminal. It is allowed that the frequency domain resources occupied by the CORESET for the terminal exceed the bandwidth supported by the terminal, so that the terminal can support a larger aggregation level as much as possible, which effectively improves the transmission performance of the downlink channel, enhances the coverage of the downlink channel, improves the system communication efficiency, effectively reduces the resource waste, and improves the resource utilization.

In order to implement the above embodiments, an embodiment of the disclosure further provides a communication device, including a processor and a memory storing a computer program. When the computer program is executed by the processor, the device is caused to perform the methods of the embodiments illustrated in FIG. 2, FIG. 4, FIG. 6, and FIG. 8.

In order to implement the above embodiments, an embodiment of the disclosure further provides a communication device, including a processor and a memory storing stores a computer program. When the computer program is executed by the processor, the device is caused to perform the methods of the embodiments illustrated in FIG. 9.

In order to implement the above embodiments, an embodiment of the disclosure further provides a communications device, including a processor and an interface circuit. The interface circuit is configured to receive code instructions and transmit the code instructions to the processor. The processor is configured to run the code instructions, so as to perform the methods of the embodiments illustrated in FIG. 2, FIG. 4, FIG. 6, and FIG. 8.

In order to implement the above embodiments, an embodiment of the disclosure further provides a communications device, including a processor and an interface circuit. The interface circuit is configured to receive code instructions and transmit the code instructions to the processor. The processor is configured to run the code instructions, so as to perform the methods of the embodiments illustrated in FIG. 9.

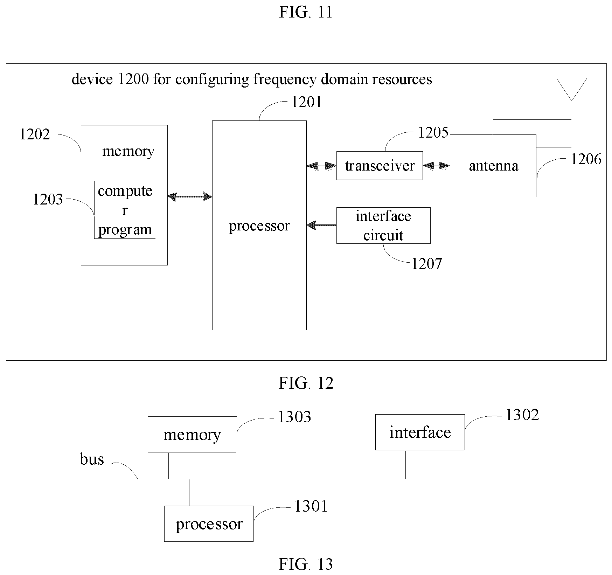

Referring to FIG. 12, FIG. 12 is a structural diagram illustrating a device for configuring frequency domain resource according to embodiments of the present disclosure. The device 1200 for configuring frequency domain resources may be a network device, a terminal, a chip, a chip system, a processor, or the like that supports the network device to implement the above methods, or may be a chip, a chip system, a processor, or the like that supports the terminal to implement the above methods. The device may be used to implement the methods described in the above method embodiments, and the details refer to the description in the above method embodiments.

The device 1200 for configuring frequency domain resources may include one or more processors 1201. The processor 1201may be a general-purpose processor or a dedicated processor or the like. For example, it may be a baseband processor or a central processing unit. The baseband processor may be configured to process a communication protocol and communication data. The central processing unit may be configured to control the device for configuring frequency domain resources (for example, a base station, a baseband chip, a terminal, a terminal chip, a DU, or a CU), execute a computer program, and process data of the computer program.

Alternatively, the device 1200 for configuring frequency domain resources may further include one or more memories 1202, which may store a computer program 1203, and the processor 1201 executes the computer program 1203, so that the device 1200 for configuring frequency domain resources performs the methods described in the above method embodiments. The computer program 1203 may be solidified in the processor 1201, and in this case, the processor 1201 may be implemented by hardware.

Optionally, data may also be stored in the memory 1202. The device 1200 for configuring frequency domain resources and the memory 1202 may be separately disposed, or may be integrated together.

Optionally, the device 1200 for configuring frequency domain resources may further include a transceiver 1205 and an antenna 1206. The transceiver 1205 may be referred to as a transceiver unit, a transceiver, or a transceiver circuit, and is configured to implement a transceiver function. The transceiver 1005 may include a receiver and a transmitter, and the receiver may be referred to as a receiver or a receiving circuit, for implementing a receiving function; and the transmitter may be referred to as a transmitter or a transmitting circuit, for implementing a transmitting function.

Alternatively, the device 1200 for configuring frequency domain resources may further include one or more interface circuits 1207. The interface circuit 1007 is configured to receive code instructions and transmit the code instructions to the processor 1201. The processor 1201 runs the code instructions to enable the device 1200 for configuring frequency domain resources to perform the methods described in the above method embodiments.

In an implementation, the processor 1201 may include a transceiver for implementing a receiving and transmitting function. For example, the transceiver may be a transceiver circuit, an interface, or an interface circuit. The transceiver circuit, the interface, or the interface circuit for implementing the receiving and transmitting functions may be separate or integrated together. The transceiver circuit, the interface, or the interface circuit may be used for reading and writing code/data, or the transceiver circuit, the interface, or the interface circuit may be used for signal transmission or transferring.

In an implementation, the device 1200 for configuring frequency domain resources may include a circuit, and the circuit may implement a function of transmitting or receiving or communicating in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver can also be manufactured using various IC process technologies, such as a complementary metal oxide semiconductor (CMOS), a nMetal-oxide-semiconductor (NMOS), a positive channel metal oxide semiconductor (PMOS), a bipolar junction transistor (BJT), a bipolar CMOS (BiCMOS), silicon-germanium (SiGe), gallium arsenide (GaAs) and so on.

The apparatus for configuring frequency domain resources described in the above embodiments may be a network device or a terminal, but the scope of the apparatus for configuring frequency domain resources described in the disclosure is not limited herein, and a structure of the apparatus for configuring frequency domain resources may not be limited by FIG. 10 to FIG. 11. The apparatus for configuring frequency domain resources may be a standalone device or may be part of a larger device. For example, the apparatus for configuring frequency domain resources may be:

(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) modules that may be embedded in other devices;
(5) a receiver, a terminal, a smart terminal, a cellular phone, a wireless device, a handheld machine, a mobile unit, a vehicle-mounted device, a network device, a cloud device, an artificial intelligence device, and the like; or
(6) Others.

For the case where a device for configuring frequency domain resources may be a chip or a chip system, reference may be made to a structural diagram of a chip as illustrated in FIG. 13. The chip illustrated in FIG. 13 includes a processor 1301 and an interface 1302. There may be one or more processors 1301, and there may be a plurality of interfaces 1302.

In the case that the chip is configured to implement a function of the network device in the embodiments of the disclosure,

the interface 1302 is configured to receive code instructions and transmit the code instructions to the processor; and the processor 1301 is configured to run the code instructions to perform the methods as illustrated in FIG. 2 , FIG. 4 , FIG. 6 and FIG. 8.

In the case that a chip is configured to implement a function of the terminal in the embodiments of the disclosure,

the interface 1302 is configured to receive code instructions and transmit the code instructions to the processor; and the processor 1301 is configured to run the code instructions to perform the method as illustrated in FIG. 9.

Optionally, the chip further includes a memory 1303, and the memory 1303 is configured to store necessary computer programs and data.

It may be understood by those skilled in the art that various illustrative logical blocks and steps listed in the embodiments of the disclosure may be implemented by electronic hardware, computer software, or their combination. Whether such function is implemented by hardware or software depends on the particular application and the design requirements of the entire system. Those skilled in the art may, for each particular application, use various methods to implement the described function, but such implementation should not be understood as going beyond the scope of protection of the embodiments of the disclosure.

An embodiment of the disclosure further provides a communication system. The system includes the apparatus for configuring frequency domain resources serving as the terminal and the apparatus for configuring frequency domain resources serving as the network device in the above embodiments in FIG. 10 to FIG. 11, or the system includes the device for configuring frequency domain resources serving as the terminal and the device for configuring frequency domain resources serving as the network device in the above embodiment in FIG. 12.

The disclosure further provides a readable storage medium having stored instructions that, when executed by a computer, implement the functions of any of the above method embodiments.

The disclosure further provides a computer program product that, when executed by a computer, implements the functions of any of the above method embodiments.

The above embodiments may be implemented in whole or in part by software, hardware, firmware, or any combination of them. When implemented by software, the above embodiments may be implemented, in whole or in part, in the form of a computer program product. The computer program product includes one or more computer programs. When the computer programs are loaded and executed on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, a computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server or a data center, integrated by one or more available media. The available medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of description, and are not used to limit the scope of the embodiments of the disclosure, and also indicate the order of precedence.

The term "at least one" in the disclosure may also be described as one or more, and the term "more than one/ a plurality of' may be two, three, four, or more, which is not limited in the disclosure. In the embodiments of the disclosure, for a type of technical features, "first", "second", and "third", and "A", "B", "C" and "D" are used to distinguish the type of technical features, the technical features described using the "first", "second", and "third", and "A", "B", "C" and "D" do not indicate any order of precedence or size.

The correspondence illustrated in tables in the disclosure may be configured, or may be predefined. The values of the information in each table is merely as an example, and may be configured to other values, which is not limited in the disclosure. When a correspondence between pieces of information and parameters is configured, it is not necessary to configure all correspondences illustrated in the tables. For example, in the tables in the disclosure, the correspondence illustrated in some rows may also be not configured. For another example, appropriate deformation adjustment may be performed based on the above tables, for example, splitting, merging, or the like. Names of titles illustrated in the above tables may also use other names that may be understood by the communication apparatus, and values or representations of the parameters may also be other values or representations that may be understood by the communication apparatus. When the above tables are implemented, other data structures may be used. For example, an array, a queue, a container, a stack, a linear table, a pointer, a linked list, a tree, a graph, a structure, a class, a heap, a hash table or the like may be used.

Predefining in the disclosure may be understood as defining, pre-defining, storing, prestoring, pre-negotiating, pre-configuring, curing, or pre-firing.

A person of ordinary skill in the art may be aware that units and algorithm steps of the examples described in connection with the embodiments disclosed herein can be implemented by electronic hardware, or a combination of computer software and the electronic hardware. Whether the functions are performed by hardware or software depends on specific applications and design constraint conditions of the technical solutions. Those skilled in the art may use different methods to implement the described functions for each specific application, but it should not be considered that the implementation goes beyond the scope of the disclosure.

Those skilled in the art may clearly understand that, for the convenience and brevity of description, the described system, apparatus, and specific working process of the units may refer to the corresponding processes in the above method embodiments, and details are not repeated herein.

It should be understood that, various forms of processes illustrated above may be configured to reorder, add or delete steps. For example, steps described in the disclosure may be executed in parallel, sequentially, or in a different order, as long as the desired result of the technical solution disclosed in the disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the spirit and principle of embodiments of the disclosure shall be included within the protection scope of embodiments of the disclosure.

**Claims**

1. A method for configuring frequency domain resources, performed by a terminal, the method comprising:

   receiving first indication information from a network device; and
   determining, based on the first indication information, frequency domain resources occupied by a control resource set (CORESET), wherein a first frequency domain resource in the frequency domain resources occupied by the CORESET is outside a bandwidth supported by the terminal.

2. The method according to claim 1, further comprising:

   determining, based on second indication information, the first frequency domain resource outside the bandwidth supported by the terminal from the frequency domain resources occupied by the CORESET; and
   wherein the second indication information comprises at least one of: a number of physical downlink control channel (PDCCH) candidates, a number of resource element groups (REGs) in a REG bundle, or a cyclic shift parameter of the REG.

3. The method according to claim 2, wherein determining, based on second indication information, the first frequency domain resource outside the bandwidth supported by the terminal from the frequency domain resources occupied by the CORESET comprises:

   determining, based on each control channel element (CCE) index, a target CCE from at least one CCE to which the REG is mapped, wherein a REG frequency domain corresponding to the target CCE occupies at least one frequency domain resource unit;
   in response to determining that the at least one frequency domain resource unit where the REG frequency domain corresponding to the target CCE is located comprises a frequency domain resource unit with a lowest frequency in the frequency domain resources occupied by the CORESET, determining that at least the frequency domain resource unit with the lowest frequency is the first frequency domain resource outside the bandwidth supported by the terminal; and
   in response to determining that the at least one frequency domain resource unit where the REG frequency domain corresponding to the target CCE is located comprises a frequency domain resource unit with a highest frequency in the frequency domain resources occupied by the CORESET, determining that at least the frequency domain resource unit with the highest frequency is the first frequency domain resource outside the bandwidth supported by the terminal.

4.  The method according to claim 2, wherein determining, based on second indication information, the first frequency domain resource outside the bandwidth supported by the terminal from the frequency domain resources occupied by the CORESET comprises:

    determining, based on the number of PDCCH candidates, at least one CCE that is not mapped to the PDCCH candidates; and
    determining that a set number of frequency domain resource units with a highest frequency position and/or a set number of frequency domain resource units with a lowest frequency position in the at least one CCE that is not mapped to the PDCCH candidates are the first frequency domain resource outside the bandwidth supported by the terminal.

5.  The method according to claim 1, wherein

    a frequency domain resource unit with a lowest frequency in the frequency domain resources occupied by the CORESET is aligned with a frequency domain resource unit with a lowest frequency in the bandwidth supported by the terminal; or
    a frequency domain resource unit with a highest frequency in the frequency domain resources occupied by the CORESET is aligned with a frequency domain resource unit with a highest frequency in the bandwidth supported by the terminal.

6.  The method according to claim 1, wherein
    the CORESET is CORESET#0, the first indication information is remaining minimum system information (RMSI), and the first indication information is configured to determine a frequency domain resource length for the CORESET#0 and a corresponding number of symbols for the CORESET#0 from at least one combination of a frequency domain resource length and a corresponding number of symbols agreed by a protocol.

7.  A method for configuring frequency domain resources, performed by a network device, the method comprising:

    sending first indication information to a terminal;
    wherein the first indication information is configured to determine frequency domain resources occupied by a control resource set (CORESET), and a first frequency domain resource in the frequency domain resources occupied by the CORESET is outside a bandwidth supported by the terminal.

8.  The method according to claim 7, wherein

    a frequency domain resource unit with a lowest frequency in the frequency domain resources occupied by the CORESET is aligned with a frequency domain resource unit with a lowest frequency in the bandwidth supported by the terminal; or
    a frequency domain resource unit with a highest frequency in the frequency domain resources occupied by the CORESET is aligned with a frequency domain resource unit with a highest frequency in the bandwidth supported by the terminal.

9.  The method according to claim 7, wherein
    the CORESET is CORESET#0, the first indication information is remaining minimum system information (RMSI), and the first indication information is configured to determine a frequency domain resource length for the CORESET#0 and a corresponding number of symbols for the CORESET#0 from at least one combination of a frequency domain resource length and a corresponding number of symbols agreed by a protocol.

10. An apparatus for configuring frequency domain resources, applied to a terminal, the apparatus comprising:

    a transceiver unit, configured to receive first indication information from a network device; and
    a processing unit, configured to determine, based on the first indication information, frequency domain resources occupied by a control resource set (CORESET), wherein a first frequency domain resource in the frequency domain resources occupied by the CORESET is outside a bandwidth supported by the terminal.

11. The apparatus according to claim 10, wherein the processing unit is further configured to:

determine, based on second indication information, the first frequency domain resource outside the bandwidth supported by the terminal from the frequency domain resources occupied by the CORESET; and

wherein the second indication information comprises at least one of: a number of physical downlink control channel (PDCCH) candidates, a number of resource element groups (REGs) in a REG bundle, or a cyclic shift parameter of the REG.

12. The apparatus according to claim 11, wherein the processing unit is specifically configured to:

determine, based on each control channel element (CCE) index, a target CCE from at least one CCE to which the REG is mapped, wherein a REG frequency domain corresponding to the target CCE occupies at least one frequency domain resource unit;

in response to determining that the at least one frequency domain resource unit where the REG frequency domain corresponding to the target CCE is located comprises a frequency domain resource unit with a lowest frequency in the frequency domain resources occupied by the CORESET, determine that at least the frequency domain resource unit with the lowest frequency is the first frequency domain resource outside the bandwidth supported by the terminal; and

in response to determining that the at least one frequency domain resource unit where the REG frequency domain corresponding to the target CCE is located comprises a frequency domain resource unit with a highest frequency in the frequency domain resources occupied by the CORESET, determine that at least the frequency domain resource unit with the highest frequency is the first frequency domain resource outside the bandwidth supported by the terminal.

13. The apparatus according to claim 11, wherein the processing unit is specifically configured to:

determining, based on the number of PDCCH candidates, at least one CCE that is not mapped to the PDCCH candidates; and

determining that a set number of frequency domain resource units with a highest frequency position and/or a set number of frequency domain resource units with a lowest frequency position in the at least one CCE that is not mapped to the PDCCH candidates are the first frequency domain resource outside the bandwidth supported by the terminal.

14. The apparatus according to claim 10, wherein

a frequency domain resource unit with a lowest frequency in the frequency domain resources occupied by the CORESET is aligned with a frequency domain resource unit with a lowest frequency in the bandwidth supported by the terminal; or

a frequency domain resource unit with a highest frequency in the frequency domain resources occupied by the CORESET is aligned with a frequency domain resource unit with a highest frequency in the bandwidth supported by the terminal.

15. The apparatus according to claim 10, wherein the CORESET is CORESET#0, the first indication information is remaining minimum system information (RMSI), and the first indication information is configured to determine a frequency domain resource length for the CORESET#0 and a corresponding number of symbols for the CORESET#0 from at least one combination of a frequency domain resource length and a corresponding numbers of symbol agreed by a protocol.

16. An apparatus for configuring frequency domain resources, applied to a network device, the apparatus comprising:

a transceiver unit, configured to send first indication information to a terminal;

wherein the first indication information is configured to determine frequency domain resources occupied by a control resource set (CORESET), and a first frequency domain resource in the frequency domain resources occupied by the CORESET is outside a bandwidth supported by the terminal.

17. The apparatus according to claim 16, wherein

a frequency domain resource unit with a lowest frequency in the frequency domain resources occupied by the CORESET is aligned with a frequency domain resource unit with a lowest frequency in the bandwidth supported by the terminal; or

a frequency domain resource unit with a highest frequency in the frequency domain resources occupied by the CORESET is aligned with a frequency domain resource unit with a highest frequency in the bandwidth supported by the terminal.

18. The apparatus according to claim 16, wherein
the CORESET is CORESET#0, the first indication information is remaining minimum system information (RMSI), and the first indication information is configured to determine a frequency domain resource length for the CORESET#0 and a corresponding number of symbols for the CORESET#0 from at least one combination of a frequency domain resource length and a corresponding number of symbols agreed by a protocol.

19. A communication device, comprising: a processor, and a memory storing a computer program; wherein when the computer program is executed by the processor, the device is caused to perform the method according to any one of claims 1 to 6.

20. A communication device, comprising: a processor, and a memory storing a computer program; wherein when the computer program is executed by the processor, the device is caused to perform the method according to any one of claims 7 to 9.

21. A communication device, comprising: a processor, and an interface circuit,

   wherein the interface circuit is configured to receive code instructions and transmit the code instructions to the processor,
   the processor is configured to run the code instructions, so that the device is caused to execute the method according to any one of claims 1 to 6.

22. A communication device, comprising: a processor, and an interface circuit,

   wherein the interface circuit is configured to receive code instructions and transmit the code instructions to the processor,
   the processor is configured to run the code instructions, so that the device is caused to execute the method according to any one of claims 7 to 9.

23. A computer-readable storage medium for storing instructions which, when executed by a processor, are capable of implementing the method according to any one of claims 1 to 6.

24. A computer-readable storage medium for storing instructions which, when executed by a processor, are capable of implementing the method according to any one of claims 7 to 9.

communication system

101                                    102

network
device                                 terminal

FIG. 1a

CORESET resources

symbols

frequency

unavailable resources

FIG. 1b

receiving first indication information from a network device    201

determining, based on the first indication information, frequency domain resources occupied by a control resource set (CORESET), in which a first frequency domain resource in the frequency domain resources occupied by the CORESET is outside a bandwidth supported by the terminal    202

FIG. 2

......

| 15 | 16 | 17 |
|----|----|----|
| 12 | 13 | 14 |
| 9  | 10 | 11 |
| 6  | 7  | 8  |
| 3  | 4  | 5  |
| 0  | 1  | 2  |

REG

FIG. 3a

FIG. 3b

FIG. 3c

FIG. 3d

receiving first indication information from a network device — 401

↓

determining, based on the first indication information, frequency domain resources occupied by a CORESET, in which a first frequency domain resource in the frequency domain resources occupied by the CORESET is outside a bandwidth supported by the terminal — 402

↓

determining, based on each CCE index, a target CCE from at least one CCE to which a REG is mapped — 403

404 — in response to determining that the at least one frequency domain resource unit where the REG frequency domain corresponding to the target CCE is located includes a frequency domain resource unit with a lowest frequency in the frequency domain resources occupied by the CORESET, determining that at least the frequency domain resource unit with the lowest frequency is outside the bandwidth of the terminal

405 — in response to determining that the at least one frequency domain resource unit where the REG frequency domain corresponding to the target CCE is located includes a frequency domain resource unit with a highest frequency in the frequency domain resources occupied by the CORESET, determining that at least the frequency domain resource unit with the highest frequency is outside the bandwidth of the terminal

FIG. 4

| resources occupied by CORESET | Allocated resources | | | | UE bandwidth |
|---|---|---|---|---|---|
| | | 33 | 34 | 35 | REG Bundle 11 |
| | | 30 | 31 | 32 | REG Bundle 10 |
| | | 27 | 28 | 29 | REG Bundle 9 |
| | | 24 | 25 | 26 | REG Bundle 8 |
| | | 21 | 22 | 23 | REG Bundle 7 |
| | | 18 | 19 | 20 | REG Bundle 6 |
| | | 15 | 16 | 17 | REG Bundle 5 |
| | | 12 | 13 | 14 | REG Bundle 4 |
| | | 9 | 10 | 11 | REG Bundle 3 |
| | | 6 | 7 | 8 | REG Bundle 2 |
| | | 3 | 4 | 5 | REG Bundle 1 |
| | | 0 | 1 | 2 | REG Bundle 0 |

REG Bundle

| 1 | 2 | 3 | 4 | 5 | 6 |
|---|---|---|---|---|---|
| 7 | 8 | 9 | 10 | 11 | 0 |

REG Bundle

| 0 | 1 | 2 | 3 | 4 | 5 |
|---|---|---|---|---|---|
| 6 | 7 | 8 | 9 | 10 | 11 |

$n_{shift}=1$

$n_{shift}=0$

REG Bundle    CCE

REG Bundle    CCE

FIG. 5

receiving first indication information from a network device — 601

determining, based on the first indication information, frequency domain resources occupied by a CORESET, in which a first frequency domain resource in the frequency domain resources occupied by the CORESET is outside a bandwidth supported by the terminal — 602

determining, based on a number of PDCCH candidates, at least one CCE that is not mapped to the PDCCH candidates — 603

determining that a set number of frequency domain resource units with a highest frequency position and/or a set number of frequency domain resource units with a lowest frequency position in the at least one CCE that is not mapped to the PDCCH candidates are outside the bandwidth supported by the terminal — 604

FIG. 6

FIG. 7

receiving first indication information from a network device 〜801

↓

determining, based on the first indication information, frequency domain resources occupied by a CORESET, in which a first frequency domain resource in the frequency domain resources occupied by the CORESET is outside a bandwidth supported by the terminal; a frequency domain resource unit with a lowest frequency in the frequency domain resources occupied by the CORESET is aligned with a frequency domain resource unit with a lowest frequency in the bandwidth supported by the terminal; or a frequency domain resource unit with a highest frequency in the frequency domain resources occupied by the CORESET is aligned with a frequency domain resource unit with a highest frequency in the bandwidth supported by the terminal 〜802

FIG. 8

sending first indication information to a terminal, in which the first indication information is configured to determine frequency domain resources occupied by a CORESET, and a first frequency domain resource in the frequency domain resources occupied by the CORESET is outside a bandwidth supported by the terminal 〜901

FIG. 9

〜1000

apparatus for configuring
frequency domain resources

〜1010

transceiver unit

〜1020

processing unit

FIG. 10

〜1100

apparatus for configuring
frequency domain resources

〜1110

transceiver unit

FIG. 11

device 1200 for configuring frequency domain resources

1201

1202

memory

1203

compute r program

processor

1205

transceiver

antenna

1206

interface circuit

1207

FIG. 12

1303

memory

1302

interface

bus

1301

processor

FIG. 13

| INTERNATIONAL SEARCH REPORT | International application No. |
|---|---|
| | **PCT/CN2022/085977** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 控制资源集, 频域, 带宽, 降低能力终端, 指示, 聚合, 等级, 水平, 覆盖, 下行, 对齐, 映射, CORESET, frequency domain, bandwidth, redcap, indicate, aggregation, level, coverage, downlink, alignment, map

**C. DOCUMENTS CONSIDERED TO BE RELEVANT**

| Category* | Citation of document, with indication, where appropriate, of the relevant passages | Relevant to claim No. |
|---|---|---|
| X | CN 112399591 A (HUAWEI TECHNOLOGIES CO., LTD.) 23 February 2021 (2021-02-23) description, paragraphs 3-101 and 286-292 | 1, 5-10, 14-24 |
| A | CN 113645705 A (CITIC MOBILE COMMUNICATION TECHNOLOGY CO., LTD.) 12 November 2021 (2021-11-12) entire document | 1-24 |
| A | CN 113301649 A (DATANG MOBILE COMMUNICATIONS EQUIPMENT CO., LTD.) 24 August 2021 (2021-08-24) entire document | 1-24 |
| A | CN 111818646 A (VIVO COMMUNICATION TECHNOLOGY CO., LTD.) 23 October 2020 (2020-10-23) entire document | 1-24 |
| A | CN 114071429 A (HUAWEI TECHNOLOGIES CO., LTD.) 18 February 2022 (2022-02-18) entire document | 1-24 |
| A | WO 2022000500 A1 (BEIJING XIAOMI MOBILE SOFTWARE CO., LTD.) 06 January 2022 (2022-01-06) entire document | 1-24 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 September 2022** | **12 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/085977**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022014833 A1 (SAMSUNG ELECTRONICS CO., LTD.) 20 January 2022 (2022-01-20) <br> entire document | 1-24 |
| A | WO 2021126045 A1 (TELEFONAKTIEBOLAGET LM ERICSSON (PUBL)) 24 June 2021 (2021-06-24) <br> entire document | 1-24 |
| A | SAMSUNG. "Coverage recovery for low capability device" <br> *3GPP TSG RAN WG1 #101-e R1-2003912*, 15 May 2020 (2020-05-15), <br> entire document | 1-24 |

Form PCT/ISA/210 (second sheet) (January 2015)

INTERNATIONAL SEARCH REPORT
Information on patent family members

International application No.

**PCT/CN2022/085977**

| Patent document cited in search report | | | Publication date (day/month/year) | Patent family member(s) | | | Publication date (day/month/year) |
|---|---|---|---|---|---|---|---|
| CN | 112399591 | A | 23 February 2021 | WO | 2021032017 | A1 | 25 February 2021 |
| | | | | US | 2022174717 | A1 | 02 June 2022 |
| | | | | EP | 4017180 | A1 | 22 June 2022 |
| CN | 113645705 | A | 12 November 2021 | None | | | |
| CN | 113301649 | A | 24 August 2021 | WO | 2021164477 | A1 | 26 August 2021 |
| CN | 111818646 | A | 23 October 2020 | WO | 2021017948 | A1 | 04 February 2021 |
| | | | | CN | 111818646 | B | 24 September 2021 |
| | | | | SG | 11202200879 | A | 25 February 2022 |
| | | | | KR | 20220042411 | A | 05 April 2022 |
| | | | | US | 2022150720 | A1 | 12 May 2022 |
| | | | | EP | 4007408 | A1 | 01 June 2022 |
| | | | | IN | 202227010135 | A | 08 July 2022 |
| CN | 114071429 | A | 18 February 2022 | WO | 2022028311 | A1 | 10 February 2022 |
| WO | 2022000500 | A1 | 06 January 2022 | CN | 111937468 | A | 13 November 2020 |
| WO | 2022014833 | A1 | 20 January 2022 | KR | 20220008701 | A | 21 January 2022 |
| WO | 2021126045 | A1 | 24 June 2021 | None | | | |

Form PCT/ISA/210 (patent family annex) (January 2015)